# EUROPEAN PATENT APPLICATION

(11) **EP 2 371 540 A1**
(43) Date of publication of application: **05.10.2011**
(21) Application number: 11171743.5
(22) Date of filing: 18.12.2008
(51) Int. Cl.: B32B 27/08, B32B 27/30, B32B 27/36, B32B 27/32

(54) **Co-extruded fluoropolymer multilayer laminates**

(30) Priority: 21.12.2007 US 16104 P; 17.12.2008 US 336681
(62) Divisional of application: 08868978.1
(71) Applicant: Saint-Gobain Performance Plastics Corporation, Aurora, OH 44202 (US)
(72) Inventor: Ranade, Aditya, P., Natick, MA Massachusetts 01760 (US); Kenney, Maryann, C., Foxboro, MA Massachusetts 02035 (US); Sekhon, Gurkirat, S., Northborough, MA Massachusetts 01532 (US)
(74) Representative: Zimmermann & Partner

(57) **Abstract**

The invention describes novel multi-layer coextruded films with a first layer of a fluoropolymer, a second layer of a poly(methyl acrylate) or a poly(methyl methacrylate), which second layer is a tie layer in contact with the first layer, a third layer of a polyester or polycarbonate in contact with the second, layer, a fourth layer of poly(methyl.acrylate) or a poly(methyl methacrylate), which fourth layer is a tie layer in contact with the third layer, and a fifth layer of a fluoropolymer or a polyolefin melt adhesive in contact with the fourth layer.

## Description

### CROSS REFERENCE TO RELATED APPLICATIONS

This application claims priority to United States Provisional Patent Application No. 61/016,104, filed December 21, 2007, the entire content of which is hereby incorporated by reference in its entirety.

### FIELD OF THE INVENTION

The invention relates generally to multilayer fluoropolymer films or laminates, and methods for their manufacture that are useful as packaging materials.

### BACKGROUND OF THE INVENTION

Multilayer films or laminates are constructions, which attempt to incorporate the properties of dissimilar materials in order to provide an improved performance versus the materials separately. Such properties include barrier resistance to elements such as water, cut-through resistance, weathering resistance and/or electrical insulation. Up until the present invention, such laminates often result in a mis-balance of properties, are expensive, or difficult to handle or process. In addition, the inner layers are often not fully protected over the life of the laminate.

Sophisticated equipment in the electrical and electronic fields requires that the components of the various pieces of equipment be protected from the effects of moisture and the like. For example, photovoltaic cells and solar panels comprising photovoltaic cells must be protected from the elements, especially moisture, which can negatively impact the function of the cells. In addition, circuit boards used in relatively complicated pieces of equipment such as computers, televisions, radios, telephones, and other electronic devices should be protected from the effects of moisture. In the past, solutions to the problem of moisture utilized metal foils as a vapor or moisture barrier. Metal foils, however, must be insulated from the electronic component to avoid interfering with performance. Previous laminates using metal foils typically displayed a lower level of dielectric strength than was desirable, while other laminates using a metal foil layer were also susceptible to other environmental conditions.

Thin multi-layer films are useful in many applications, particularly where the properties of one layer of the multi-layer film complement the properties of another layer, providing the multi-layer film with properties or qualities that cannot be obtained in a single layer film. Previous multi-layer films provided only one of the two qualities desirable for multi-layer films for use in electronic devices.

A need remains for a multi-layer film that provides an effective barrier to moisture while also providing high dielectric strength or low dielectric constant, and mechanical flexibility.

### BRIEF SUMMARY OF THE INVENTION

The present invention surprisingly provides multi-layer films that overcome one or more of the disadvantages known in the art. It has been discovered that it is possible to make and use multi-layer films having the following characteristics for example, packaging materials for electronic devices. These multi-layer films help to protect the components from heat, humidity, chemical, radiation, physical damage and general wear and tear. Such packaging materials help to electrically insulate the active components/circuits of the electronic devices.

In one aspect, the present invention provides a multi-layer film that includes a first outer layer comprising a fluoropolymer; a second interior layer comprising a polyester and an acrylic or methacrylic compatibilizer; and a third outer layer comprising a fluoropolymer.

In another aspect, the present invention pertains to a multi-layer film that includes a first outer layer comprising a fluoropolymer; a second interior layer comprising a polycarbonate and an acrylic or methacrylic compatibilizer; and third outer layer comprising a fluoropolymer.

In still another aspect, the present invention pertains to a multi-layer film that includes a first outer layer comprising a fluoropolymer; a second interior layer comprising a polyester and an alkyl tin oxide as an inorganic compatibilizer; and a third outer layer comprising a fluoropolymer.

In another aspect, the present invention pertains to a multi-layer film that includes a first outer layer comprising a fluoropolymer; a second interior layer comprising a polycarbonate and an alkyl tin oxide as an inorganic compatibilizer; and a third outer layer comprising a fluoropolymer.

In yet another aspect, the present invention pertains to a multi-layer film that includes a first outer layer comprising a fluoropolymer; a second interior layer comprising a polyester and an acrylic or methacrylic compatibilizer; and a third outer layer comprising a polyolefin melt adhesive.

In still another aspect, the present invention pertains to a multi-layer film that includes a first outer layer comprising a fluoropolymer; a second interior layer comprising a polycarbonate and an acrylic or methacrylic compatibilizer; and a third outer layer comprising a polyolefin melt adhesive

In yet another aspect, the present invention pertains to a multi-layer film that includes a first outer layer comprising a fluoropolymer; a second interior layer comprising a polycarbonate and an alkyl tin oxide as an inorganic compatibilizer; and a third outer layer comprising a polyolefin melt adhesive.

In one embodiment, an acrylate or methacrylate compatibilizer can be added to the first or third outer fluoropolymer layer(s) or both, or outer fluoropolymer layer or outer polyolefin melt adhesive layer or both.

In another embodiment, an inorganic compatibilizer, such as an alkyl tin oxide, can be added to the outer first or third layer fluoropolymer layer(s) or both, or an outer fluoropolymer layer or outer polyolefin melt adhesive layer or both.

In still another embodiment, the multi-layer film can have five (5) layers. A first layer can be a fluoropolymer, the second layer can be one or more compatibilizers (as described herein), the third layer can be a polyester or polycarbonate or mixtures thereof (as described herein), the fourth layer can be one or more compatibilizers (as described herein) and a fifth layer can be either a fluoropolymer layer or a polyolefin melt adhesive. It should be understood that the fluoropolymer layer(s), the polyester, the polycarbonate (or mixtures thereof), and the polyolefin melt adhesive can further include a compatibilizer or a mixture of compatibilizers.

Post extrusion ultraviolet light treatment can help promote adhesion between the fluoropolymer and non-fluoropolymer layers.

In the various embodiments of the multi-layer films, typical fluorpolymers include PVDF, VDF copolymers, THV, ECTFE and ETFE. Typical polyesters include PET (Polyethylene terpthalate), PEN (Polyethylene Naphthanate), PETg (a copolymer of PET) and PETBB (Polyethylene Terephthalate Bibenzoate).

Suitable polycarbonates useful in the multi-layer films of the invention include aromatic homopolymers based on bisphenol A, for example

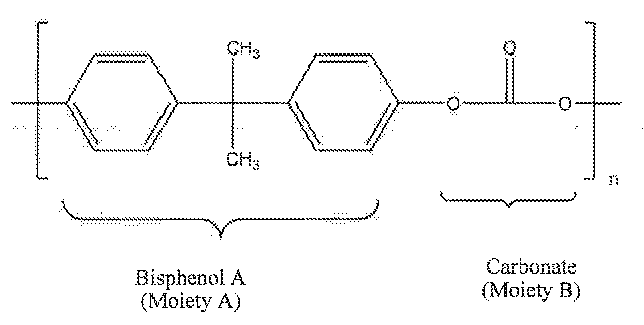

n is an integer from 2 to about 100,000 or greater.

Dow Calibre 200 Series, Lexan DMX Series from Sabic Innovative Plastics, and Makrolon from Bayer Corp. They may also be copolymers of bisphenol A polycarbonate e.g. a copolymer of the above polycarbonate and polysiloxane or resorcinol phthalate.

Suitable acrylic and methacrylic compatibilizers useful in the multi-layer films of the invention include poly(methyl acrylate) and poly(methyl methacrylate) or mixtures thereof.

Exemplary alkyl tin oxide compatibilizer include, for example, dibutyl tin oxide, Bu₂SnO. Alkyl tin oxides induce copolymerization between polyesters and polyolefin melt adhesive layers, thereby significantly improving interfacial adhesion e.g. Bu₂SnO induces formation of PETg-co-EVA in PETg EVA melt blends.

Polyolefin melt adhesives include, for example, copolymers of ethylene and vinyl acetate with a vinyl acetate content ranging between about 8 and about 40 mol%.

The layers used to prepare the multi-layer films of the invention are all melt processable, thus providing an advantage over that of the current art in that typical multistep fabrication is note required (to produce the multi-layer film). Co-extrusion of each layer thus provides that solvent based adhesives, such as polyurethanes, typically required to adhere each layer to each other are not required with the present invention.

It should be understood that the multi-layer films of the invention can include from 2 layers to about 12 layers of material. For example, the multi-layer films can repeat layering of a first layer and a second layer (with a compatibilizer), a first layer and a second layer, and so forth. Additionally, combinations of various layers are included herein, for example, a first layer, a second layer with a compatibilizer, a third layer and a fourth layer which is an adhesive. This layering, again, can be repeated as needed for the application envisioned.

The present invention also provides methods to prepare the multi-layer films noted throughout the specification.

The multilayer films described herein can be considered "backsheet" materials for use with photovoltaic devices as are known in the art.

While multiple embodiments are disclosed, still other embodiments of the present invention will become apparent to those skilled in the art from the following detailed description. As will be apparent, the invention is capable of modifications in various obvious aspects, all without departing from the scope of the present invention. Accordingly, the detailed descriptions are to be regarded as illustrative in nature and not restrictive.

### BRIEF DESCRIPTION OF THE DRAWINGS

Figure 1 depicts one type of 3 layer construct described herein.

Figure 2 depicts one type of 5 layer construct described herein.

### DETAILED DESCRIPTION

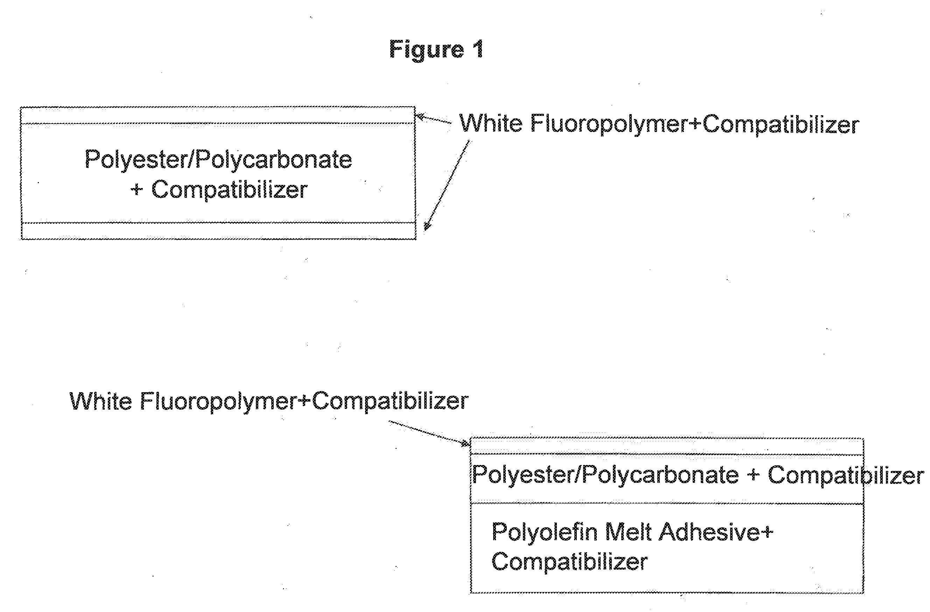

The present invention provides novel multi-layer films and methods to prepare the multilayer films by using melt processable materials and coextruding the materials to prepare the multi-layer films. In general the multi-layer films of the invention include a first outer layer comprising a fluoropolymer; a second interior layer comprising a polyester or a polycarbonate (or combinations thereof) and an acrylic or methacrylic compatibilizer, a copolymeric compatibilizer, or an alkyl tin oxide compatibilizer or combinations thereof (collectively referred to herein as either a compatibiiizer); and a third outer layer comprising a fluoropolymer or a polyolefin melt adhesive. One embodiment, of a three layer construct is shown in Figure 1.

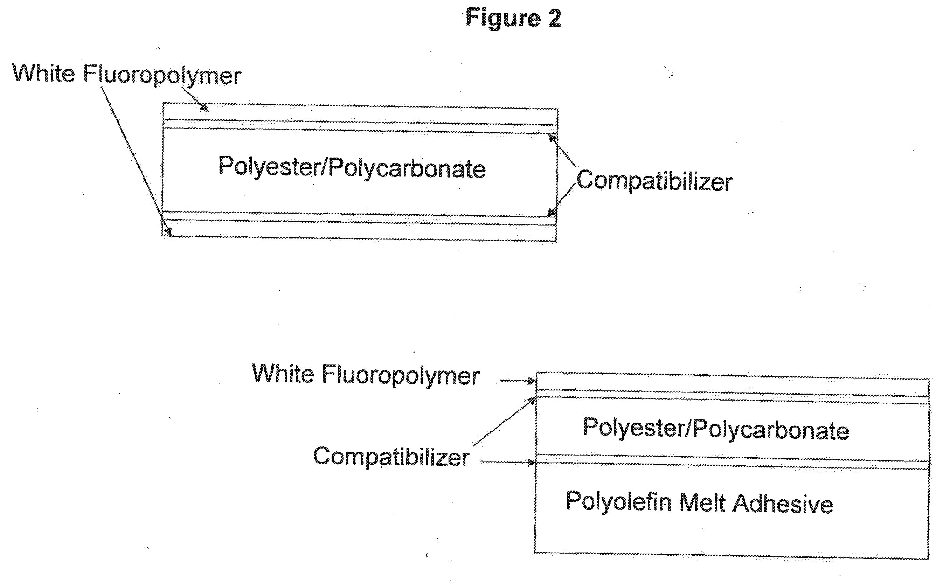

In another embodiment, the multi-layer film is a five (5) layer construct. The construct includes a first layer that is a fluoropolymer. The second layer is one or more compatibilizer(s). The third layer is a polyester or a polycarbonate or a mixture thereof. The fourth layer is one or more compatibilizer(s) and the fifth layer is a fluoropolymer or a polyolefin melt adhesive. One embodiment of a five layer construct is shown in Figure 2.

It should be understood that the fluoropolymer layer(s), the polyester layer or polycarbonate layer or combinations thereof, and/or the fluoropolymer or polyolefin layer can further include one or more compatibilizer(s).

For example, in a three layer construct, generally the first layer has a thickness of between about 2 microns (µ) and about 100 µ, more particularly between about 5 µ and about 50 µ and in particular between about 10 µ and about 40 µ.

The second layer has a thickness of between about 10 microns (µ) and about 500 µ, more particularly between about 50 µ and about 300 µ and in particular between about 70 µ and about 275 µ.

The third layer has a thickness of between about 2 microns (µ) and about 500 µ, more particularly between about 5 µ and about 400 µ and in particular between about 10 µ and about 200 µ.

If the multilayer film is a five layer construct then generally the first layer has a thickness of between about 2 microns (µ) and about 100 µ, more particularly between about 5 µ and about 50 µ and in particular between about 10 µ and about 40 µ.

The second layer has a thickness of between about 1 µ and about 50 µ, more particularly between about 2 and about 25 µ, and in particular between about 5 µ and about 15 µ.

The third layer has a thickness of between about 10 µ and about 500 µ, more particularly between about 50 µ and about 300 µ and in particular between about 70 µ and about 275 µ.

The fourth layer has a thickness of between about 1 µ and about 50 µ, more particularly between about 2 and about 25 µ, and in particular between about 5 µ and about 15 µ.

The fifth layer has a thickness of between about 2 µ and about 500 µ, more particularly between about 5 µ and about 400 µ and in particular between about 10 µ and about 200 µ.

The acrylic or methacrylic compatibilizer (or combinations thereof) when used in the first outer layer is included in a range of between about 1 and about 60, more particularly between about 10 and about 50 and in particular between about 2.0 and about 40 by weight percent.

The alkyl tin oxide when used in the third outer layer is included in a range of between about 0.05 and about 10, more particularly between about 0.5 and about 5 and in particular between about 1 and about 2 by weight percent.

The alkyl tin oxide when used in the with the second interior layer is included in a range of between about 0.05 and about 10, more particularly between about 0.5 and about 5 and in particular between about 1 and about 2 by weight percent.

The multi-layer films of the invention can be used to protect, in particular, electronic components from moisture, weather, heat, radiation, physical damage and/or insulate the component. Examples of electronic components include, but are not limited to, packaging for crystalline-silicon based thick photovoltaic modules, amorphous silicon, CIGS, CdTe based thin photovoltaic modules, LEDs, LCDs, printed circuit boards, flexible displays and printed wiring boards.

The multilayer films described herein can be placed adjacent to the electronic component, such as a photovoltaic device. The term "adjacent" is meant to encompass the possibility that the device is in direct contact with the multi-layer film(s) described herein or in indirect contact. In the later, one or more layers of secondary film(s) can separate the multi-layer film(s) described herein (often referred to as a "backsheet"). The secondary film can be an encapsulant such as those known in the art or other film material that separates the photovoltaic device from the backsheet material.

The methods of the invention to prepare the multi-layer films herein provide a couple of surprising advantages over known multi-layer films. First, since co-extrusion of the melt processable materials is utilized, the process itself eliminates multiprocessing steps often required to prepare multi-layer films. Second, most (if not all) multi-layer films require a solvent based adhesive, such as a polyurethane, to affect adhesion between layers. Adhesives are not required with the present invention.

As a consequence of the choice of materials for the multi-layer film, as well as the process to prepare the multi-layer film, the cost of the multi-layer film is decreased relative to known processes and materials.

In the specification and in the claims, the terms "including" and "comprising" are open-ended terms and should be interpreted to mean "including, but not limited to. . . . " These terms encompass the more restrictive, terms "consisting essentially of and "consisting of."

Fluoropolymers:

The phrase "fluoropolymer" is known in the art and is intended to include, for example, polytetrafluoroethylene, copolymers of tetrafluoroethylene and hexafluoropropylene, tetrafluoroethylene-perfluoro(alkyl vinyl ether) copolymers (e.g., tetrafluoroethylene-perfluoro(propyl vinyl ether), polyvinyl fluoride, polyvinylidene difluoride, and copolymers of vinyl fluoride, chlorotrifluoroethylene, and/or vinylidene difluoride (i.e., VDF) with one or more ethylenically unsaturated monomers such as alkenes (e.g., ethylene, propylene, butylene, and 1-octene), chloroalkenes (e.g., vinyl chloride and tetrachloroethylene), chlorofluoroalkenes (e,g., chlorotrifluoroethylene, 3-chloropentafluoropropene, dichlorodifluoroethylene, and 1,1-dichlorofluoroethylene), fluoroalkenes (e.g., trifluoroethylene, tetrafluoroethylene (i.e., TFE), 1-hydropentafluoropropene, 2-hydropentafluoropropene, hexafluoropropylene (i.e. HFP), and vinyl fluoride), perfluoroalkoxyalkyl vinyl ethers (e.g., CF₂OCF₂CF₂CF₂OCF=CF₂); perfluoroalkyl vinyl ethers (e.g., CF₃OCF=CF₂ and CF₃C₂CF₂OCF=CF₂), perfluoro-1,3-dioxoles such as those described in U.S. Pat. No. 4,558,142 (Squire), fluorinated diolefins (e.g., perfluorodiallyl ether or perfluoro-1,3-butadiene), and combinations thereof. Specific vinylidene difluoride copolymers include those with HFP (hexafluoropropylene), TrFE (trifluoroethylene) and CTFE (chlorotrifluoroethylene).

The fluoropolymer can be melt-processable, for example, as in the case of polyvinylidene difluoride; copolymers of vinylidene difluoride,; copolymers of tetrafluoroethylene, hexafluoropropylene, and vinylidene difluoride (e.g., those marketed by Dyneon, LLC under the trade designation copolymer of tetrafluoroethylene and hexafluoropropylene; and other melt-processable fluoroplastics; or the fluoropolymer may not be melt-processable, for example, as in the case of polytetrafluoroethylene, copolymers of TFE and low levels of fluorinated vinyl ethers), and cured fluoroelastomers

Useful fluoropolymers include those copolymers having HFP and VDF monomeric units or CTFE and VDF monomeric units or TrFE and VDF monomeric units. These include, for example, KYNARFLEX 2500, 2600, 2700, 2800, 2900 and 3100 Series from Arkema , e.g., 2500, 2650, 2750, 2850, 2950, or 3120. These also include SOLEF 11000, 21000, 30000 and 31000 series from Solvay Solexis, e.g. 11008, 11010, 20810, 21508, 21510,31008,or 31508.

Useful fluoropolymers also include copolymers of HFP, TFE, and VDF (i.e., THV). These polymers may have, for example, VDF monomeric units in a range of from at least about 2, 10, or 20 percent by weight up to 30, 40, or even 50 percent by weight, and HFP monomeric units in a range of from at least about 5, 10, or 15 percent by weight up to about 20, 25, or even 30 percent by weight, with the remainder of the weight of the polymer being TFE monomeric units. Examples of commercially available THV polymers include those marketed by Dyneon, LLC under the trade designations "DYNEON THV 2030G FLUOROTHERMOPLASTIC", "DYNEON THV 220 FLUOROTHERMOPLASTIC", "DYNEON THV 340C FLUOROTHERMOPLASTIC", "DYNEON THV 415 FLUOROTHERMOPLASTIC", "DYNEON THV 500A FLUOROTHERMOPLASTIC", "DYNEON THV 610G FLUOROTHERMOPLASTIC", or "DYNEON THV 810G FLUOROTHERMOPLASTIC".

Other useful fluoropolymers also include copolymers of ethylene, TFE, and HFP. These polymers may have, for example, ethylene monomeric units in a range of from at least about 2, 10, or 20 percent by weight up to 30, 40, or even 50 percent by weight, and HFP monomeric units in a range of from at least about 5, 10, or 15 percent by weight up to about 20, 25, or even 30 percent by weight, with the remainder of the weight of the polymer being TFE monomeric units. Such polymers are marketed, for example, under the trade designation "DYNEON FLUOROTHERMOPLASTIC HTE" (e.g., "DYNEON FLUOROTHERMOPLASTIC HTE X 1510" or "DYNEON FLUOROTHERMOPLASTIC HTE X 1705") by Dyneon, LLC.

Additional commercially available vinylidene difluoride-containing fluoropolymers include, for example, those fluoropolymers having the trade designations; "KYNAR" (e.g., "KYNAR 740") as marketed by Atofina, Philadelphia, Pa.; "HYLAR" (e.g., "HYLAR 700") as marketed by Ausimont USA, Morristown, N.J.; and "FLUOREL" (e.g., "FLUOREL FC-2178") as marketed by Dyneon, LLC.

Commercially available vinyl fluoride fluoropolymers include, for example, those homopolymers of vinyl fluoride marketed under the trade designation "TEDLAR" by E.I. du Pont de Nemours & Company, Wilmington, Del.

Useful fluoropolymers also include copolymers of tetrafluoroethylene and propylene (TFE/P). These copolymers may have, for example, TFE monomeric units in a range of from at least about 20, 30 or 40 percent by weight up to about 50, 65, or even 80 percent by weight, with the remainder of the weight of the polymer being propylene monomeric units. Such polymers are commercially available, for example, under the trade designations "AFLAS" (e.g., "AFLAS TFE ELASTOMER FA 100H", "AFLAS TFE ELASTOMER FA 150C", "AFLAS TFE ELASTOMER A 150L", or "AFLAS TFE ELASTOMER FA 150P") as marketed by Dyneon, LLC, or "VITON" (e.g., "VITON VTR-7480" or "VITON VTR-7512") as marketed by E.I. du Pont de Nemours & Company, Wilmingon, Del.

Useful fluoropolymers also include copolymers of ethylene and TFE (i.e., "ETFE"). These copolymers may have, for example, TFE monomeric units in a range of from at least about 20, 30 or 40 percent by weight up to about 50, 65, or even 80 percent by weight, with the remainder of the weight of the polymer being propylene monomeric units. Such polymers may be obtained commercially, for example, as marketed under the trade designations "DYNEON FLUOROTHERMOPLASTIC ET 6210J", "DYNEON FLUOROTHERMOPLASTIC ET 6235", or "DYNEON FLUOROTHERMOPLASTIC ET 6240J" by Dyneon, LLC.

Additionally, useful fluoropolymers include copolymers of ethylene and chlorotrifluoroethylene (ECTFE). Commercial examples include Halar 350 and Halar 500 resin from Solvay Solexis Corp. These examples are 50:50 copolymers.

Fluoropolymeric substrates may be provided in any form (e.g., beads, particles, pellets) as long as fluoropolymer can be melt processed.

Fluoropolymers are generally selected as outer layers to provide chemical resistance, electrical insulation, weatherability and/or a barrier to moisture.

Polyesters:

Exemplary polyesters include a polyester derived from a dicarboxylic acid or a lower alkyl ester thereof and a glycol; a polyester obtainable from a hydroxycarboxylic acid, if necessary, with a dicarboxylic acid or a lower alkyl ester thereof and/or a glycol; a polyester derived from a lactone.

The dicarboxylic acid component can include, for example, aliphatic dicarboxylic acids such as glutaric acid, adipic acid, pimelic acid, suberic acid, azelaic acid and sebacic acid; alicyclic dicarboxylic acids such as cyclohexa-ne-1,4-dicarboxylic acid; aromatic dicarboxylic acids such as terephthalic acid, isophthalic acid, phthalic acid, phthalic anhydride, p-.beta.-ethoxybenzoic acid, 2,6-naphthalonedicarboxylic acid, di(p-carboxyphenyl)ketone, di(p-carboxyphenyl)ether, bis(4-carboxyphenyl)ethane and 5-sodiumsulfo isophthalic acid; etc.

Examples of the glycol component, include aliphatic diols such as ethylene glycol, diethylene glycol, polyethylene glycol, propylene glycol, dipropylene glycol, polypropylene glycol, butanediol, polytetramethylene glycol, hexanediol and neopentyl glycol; an alicyclic diol such as a cyclohexanediol; an aromatic diol such as bisphenol A; and an alkylene oxide (e.g. ethylene oxide) adduct of bisphenol A.

Suitable polyesters are, for example, polyethylene terephthalate (PET), polyethylene naphthalate (PEN), polybutylene terephthalate (PBT), poly-trimethylene terephthalate (PTT), bibenzene-modified polyethylene terephthalate (PETBB), bibenzene-modified polybutylene terephthalate (PBTBB), bibenzene-modified polyethylene naphthalate (PENBB) or mixtures thereof, PET, PBT, PEN and PPT and mixtures and copolyesters thereof being preferred.

For the preparation of the polyesters, isophthalic acid (IPA), trans- and/or cis-1,4-cyclohexanedimethanol (c-CHD, t-CHDM or c/t-CHDM) and other suitable dicarboxylic acid components (or dicarboxylic esters) and diol components can also be used in addition to the main monomers, such as dimethyl terephthalate (DMT), ethylene glycol (EG), propylene glycol (PG), 1,4-butanediol, terephthalic acid (TA), benzenedicarboxylic acid and/or 2,6-naphthalenedicarboxylic acid (NDA).

Other suitable polyesters are aliphatic polyesters, such as polyhydroxybutyrate (PHB) and its copolymer with polyhydroxyvalerate (PHV), polyhydroxybutyrate-valerate (PHBV), poly(epsilon.-caprolactone) (PCL), SP 3/6, SP 4/6 (consisting of 1,3-propanediol/adipate or 1,4-butanediol/adipate), polycaprolactam or generally polyesters comprising adipic acid, and the esters of other aliphatic carboxylic acids.

Polyester substrates may be provided in any form (e.g., film, tape, sheet, web, beads, particles, or as a molded or shaped article) as long as material can be melt processed.

Polycarbonates:

The polycarbonate useful in the invention includes a polymer obtainable by providing a dihydroxy compound to react with phosgene or a carbonic diester such as diphenyl carbonate. The hydroxyl compound can be an alicyclic compound or others but preferably be a bisphenol compound.

Bisphenol compounds include bis(4-hydroxyphenyl)methane, 1,1-bis(4-hydroxyphenyl)ethane, 1,1-bis(4-hydroxyphenyl)propane, hydroxyphenyl)ethane, 1,1-bis(4-hydroxyphen)propane; 2,2-bins(4-hydroxyphenyl)propane (hereinafter referred to as bisphenol A), 2,2-bis(4-hydroxyphenyl)butane, 2,2-bis(4-hydroxyphenyl)pentane, 2,2-bis(4-hydroxyphenyl)-3-methylbutane, 2,2-bis(4-hydroxyl)henyl)hexane, 2,2-bis(4-hydroxyphenyt)-4-methypentane, 1,1-bis(4-1-hydroxyphennyl)cyclopentane, 1,1-bis(4-hydroxyphenyl)cyclohexane, bis(4-hydroxy-3-methylphenyl)methane, 1,1-bis(4-hydroxy-3-methylphenyl)ethane, 2,2-bis(4-hydroxy-3-methylphenyl)propane, 2,2-bis(4hydroxy-3-ethylphenyl)propane, 2,2-bis(4-hydroxy-3-isopropylphenyl)propane, 2.2-bis(4-hydroxy-3-sec-butylphenyl)propane, bis(4-hydroxyphenyl)phenylmethane, 1,1-bis(4-hydroxyphenyl)-1-phenylethane, 1,1-bis(4-hydroxyphenyl)-1-phenyl propane, bis(4-hydroxyphenyl)diphenylmethane, bis(4-hydroxyphenyl)dibenzylmethane, 4,4'-dihydroxyphenyl ether, 4,4'-dihydroxydiphenyl sulfone, 4,4'-dihydroxydiphenyl sulfide, etc. One particular commercially available polycarbonate are polycarbonate copolymers, LEXAN DMX2415 from GE Plastics

Polycarbonate substrates may be provided in any form (e.g., film, tape, sheet, web, beads, particles, or as a molded or shaped article) as long as material can be melt processed.

. Polyester and polycarbonate materials are selected for the interior layer due in part to their dielectric properties as they are able to withstand partial discharge and their superior mechanical toughness, impact resistance

Compatibilizers:

The term "compatibilizer" is intended to mean a substance that improves the interfacial adhesion between two adjacent layers either via formation of chemical bonds or via hydrogen bonding/van der Wails forces. The compatibilizer can be carbon based polymeric in form or an inorganic material capable of such interaction(s). These include, for example but are not limited to, polyacrylates, polymethacrylates, grafted copolymers and alky tin oxides.

Polyacrylates and Methacrylate compatibilizers:

Polyacrylates and methacrylates include polymers of acrylic acid, methacrylic acid, alkyl esters of acrylates and alkyl esters of methacrylates. Typically between about 5 to about 20% by weight can be added to either the second or subsequent layers. Not to be limited by theory, it is considered, for example, that PVDF and PUMA are thermodynamically miscible and hence promote adhesion. PMMA is thermodynamically compatible with Polyesters and Polycarbonate due to closeness in interaction parameters,

Commercial grades of useful acrylate and methacrylate compatibilizers include Plexiglas and Plexiglas DR series from Arkema e.g. Plexiglas V045, V052, VM-100, VS-100, V925, B852; Solarkote series from Arkema e.g. A200 H300 P600 and Lucite Acrylics from Lucite Inc. e.g. CP1000E. 4G, 4F, 47G, 6751, 30B.

Copolymers:

Various copolymers can be used as a compatibilizer. Again, the compatibilizer includes functionality that can provide interfacial adhesion between two discrete layers via formation of chemical bonds, hydrogen bonding or van der Waals forces. Suitable copolymers include, for example, maleic anhydride grafted fluoropolymers, such as PVDF/maleic anhydride (KYNAR^{®} DAX series from Arkema, Inc.) or ETFE-EFEP RP5000 or EP7000 from Daikin America, Inc.), maleic anhydride grafted ethylene methylacrylates and maleic anhydride grafted ethylene butyl acrylates (such as LOTADEE^{®} 3200 series from Arkema, Inc.) or epoxide grated ethylene methacrylates (such as those from Arkema, LOTADER^{®} 8900 series).

Alkyl tin oxides:

Another family of compatibilizers useful in the present invention includes alkyl tin oxides. For example, the alkyl group about the tin metal can be a butyl group. It has been found that alkyl tin oxides work well in the present multi-layer films because they induce copolymerization of polyesters with ethylene alpha olefin copolymers (second and third layers) thereby promoting adhesion.

The compatibilizer, whether it be an acrylate, methacrylate, a maleic anhydride copolymer, or alkyl tin oxide (or combinations thereof) are intimately mixed with the appropriate material for the respective layer (any of the layers described herein). The mixing of the additive ideally should result in a homogenous composition that is extruded. The result of the intimate mixing of components is no need for additional coating/layers to adhere each layer of the multi-layer film to each other. For example, with regard to the five layer constructs described herein, the compatibilizer can be intimately mixed with an appropriate material, or used as the primary component in layers 2 and 4. In one aspect when the compatibilizer is an alkyl tin oxide, it is preferred that the compatibilizer is not a layer but is mixed with another component.

For example, an acrylic compatibilizer can be added to a fluoropolymer when a fluoropolymer layer is to be adhered to a polyester or polycarbonate layer. Likewise, as an example, an alkyl tin oxide can be added to a polyolefin (e,g., an polyalphaolefin) melt adhesive material that is to be adhered to a polyester or polycarbonate layer. As a further example, a grafted fluoropolymer copolymer can be added to a fluoropolymer material that is to be adhered to a polyester or a polycarbonate layer, As another example, a grafted ethylene acrylate can be added to a polyester or polycarbonate material that is to be adhered to a fluoropolymer.

Polyalpha olefin melt adhesives:

Polyalpha olefin melt adhesives are known in the art and include, for example, ethylene alpha olefin copolymers such as ethylene vinyl acetate, ethylene octane, ethylene propylene, ethylene methyl acrylates (EMAC), ethylene butyl acrylates (EBAC), ethylene acrylic acid (EAA), ionomer grafted polyethylenes or mixtures thereof.

lonomers include, for example, SURLYN^{®} PV-4000 (DuPont). For example, SURLYN® is the random copolymer poly(ethylene-co-methacrylic acid) (EMAA). The incorporation of methacrylic acid is typically low (< 15mol. %). Some or all of the methacrylic acid units can be neutralized with a suitable cation, commonly Na⁺ or Zn⁺², Surlyn® is produced through the copolymerization of ethylene and methacrylic acid via a high pressure free radical reaction, similar to that for the production of low density polyethylene. The neutralization of the methacrylic acid units can be done through the addition an appropriate base in solution, or in the melt mixing of base and copolymer. (See for example the figure below.)

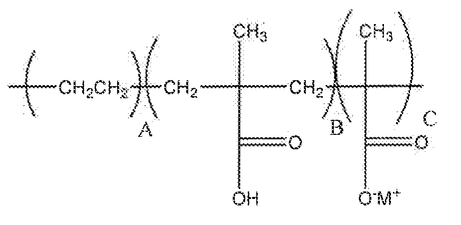

Suitable ionomers, therefore, include but are not limited to those known under the tradenames of Surlyn® (DuPont) and lotek® (Exxon Mobil).

In particular, suitable PAO hot melt adhesives include ethylene (E)/vinyl acetate (VA) polymers. The ratio of ethylene to vinyl acetate can be controlled and those EVA polymers having a VA content of about 5% to about 40 weight % are particularly useful in this invention.

The use of either the acrylic, methacrylic, or maleic anhydride copolymer compatibilizer or alkyl tin compatibilizer (or mixtures thereof) in the outer layers and/or interior layer improves the interfacial adhesion between the layers. Multi-layer films without, the compatibilizer tend to fail the tape peel test at room temperature by ASTM D903. Multi-layer films with compatibilizers incorporated into the materials pass the tape peel test at room temperatures and elevated temperatures as high as 85°C. Interfacial delamination is the most common mode of failure for packaging multi-layer films in photovoltaic module. Interfacial delamination leads to moisture ingress which is harmful to the active photovoltaic cell and leads to significant reduction in cell efficiency.

The present inventive multi-layer films do not require coupling agents that are coated onto, for example the fluoropolymer layer to adhere the interior layer and likewise, no coupling layer is required to adhere the interior layer to the outer layer. The present invention avoids the use of additional coupling or adhesive layers generally required to adhere each multi-layer film layer to each other.

One or more of the layers of the multi-layer films of the invention can include one or more additives, such as stabilizers, fillers, flame retardants, ultraviolet light absorbers and/or antioxidants. Addition of one or more of these additives to the appropriate film layer is known in the art and can be accomplished by various known methods, Generally the additive is mixed and blended with the appropriate material which is to be further extruded into the multi-layer film.

Suitable fillers include, but are not limited to, zinc oxide (ZnO), zinc sulfide (ZnS), barium sulfate (BaSO₄), Kaolin clay, calcium carbonate (CaCO₃), titanium dioxide (TiO₂) or mixtures thereof.

Exemplary ultraviolet light stabilizers and antioxidants include, but are not limited to, hindered amine stabilizer (HALS) known in the art, such as TINUVIN^{®} 200, 300, 500 and 1500 Series available from Ciba Specialty Chemicals. UV absorbers include, but are not limited to benzophenones, such as those known in the art and available from Ciba Specialty Chemicals, e.g., -TINUVIN^{®} 100, 300, 400, 600, 700 and 800 Series, Antioxidants are known in the art and include, for example, various phenolics, including Naugard BHT.

Methods to prepare the multi-layer films of the invention include cast or blown film extrusion as known in the art. Coextrusion is a particularly advantageous process for the preparation of multi-layer films of the invention. In coextrusion, the layers of the composite are brought together in a coextrusion block as melt layers and then extruded together through a die. In order to produce sheets or films, a slot die, for example, is used during extrusion.

24:1 single screw extruders can be used for the fluoropolymer outer layers. 30:1 single screw extruders with a Barrier Screw can be used for the polyester/polycarbonate core layer. 30:1 single screw extruders can be used for the tie layers/compatibilizers and the polyolefin hot melt adhesive. The melts from these extruders can be combined in a 5 layer feedblock and spread into a film using a single/multi manifold spreader die. A 3 layer stack with a casting drum can be used as a take-off system. Optional UV treatment which involves exposing the film to UV (λ=200-400 nm) can be used to enhance the interlayer adhesion.

The process is solvent-free and therefore advantageous from an economic and ecological standpoint. The process according to the invention permits the continuous preparation of endless plastics composites and, e.g., during a later manufacture of photovoltaic modules, obviates the separate insertion and polishing of the individual layers in each case (films or sheets).

The following paragraphs enumerated consecutively from 1 through 47 provide for various aspects of the present invention. In one embodiment, in a first paragraph (1), the present invention provides a multi-layer film comprising a first outer layer comprising a fluoropolymer; a second interior layer comprising a polyester or a polycarbonate; and a third outer layer comprising a fluoropolymer,

2. The multi-layer film of paragraph 1, wherein the first outer layer fluoropolymer is a polyvinyl fluoride, a polyvinylidene fluoride, a poly(vinylidene fluoride-chlorotrifltioroethylene), a poly(vinyldene fluoride" hexafluoropropylene), a poly(ethylene chlorotrifluoroethylene) or mixtures thereof.

3. The multi-layer film of either of paragraphs 1 or 2, wherein the first outer layer further comprises an acrylic or methacrylic compatibilizer,

4. The multi-layer film of paragraph 3, wherein the acrylic or methacrylic compatibilizer of the first outer layer is a poly methacrylate, a poly(methyl methacrylate) or mixtures thereof.

5. The multi-layer film of any of paragraphs 1 through 4, wherein the polyester is polyethylene terephthalate, polyethylene naphthalate, polyethylene terephthalate glycol (PETg) or mixtures thereof.

6. The multi-layer film of any of paragraphs 1 through 4, wherein the polycarbonate is a bisphenol A based homopolymer, a bisphenol A based copolymer or mixtures thereof.

7. The multi-layer film of any of paragraphs 1 through 6, wherein the second interior layer further comprises an acrylic or methacrylic compatibilizer.

8. The multi-layer film of paragraph 7, wherein the acrylic or methacrylic compatibilizer of the second interior layer is a poly methacrylate, a poly(methyl methacrylate) or mixtures thereof.

9. The multi-layer film of any of paragraphs 1 through 8, wherein the third outer layer fluoropolymer is a polyvinyl fluoride, a polyvinylidene fluoride, poly(vinylidene fluoride- hexafluoropropylene), poly(vinylidene fluoride- chlorotrifluroethylene), poly(ethylene chlorotrifluoroethylene) or mixtures thereof.

10. The multi-layer film, of any of paragraphs 1 through 9, wherein the third outer layer further comprises an acrylic or methacrylic compatibilizer.

11. The multilayer film of paragraph 10, wherein the acrylic or methacrylic compatibilizer is a poly methacrylate, a poly(methyl methacrylate) or mixtures thereof.

12. A multilayer film comprising: a first outer layer comprising a fluoropolymer; a second interior layer comprising a polyester or a polycarbonate; and a third outer layer comprising a polyolefin melt adhesive.

13. The multi-layer film of paragraph 12, wherein the first outer layer fluoropolymer is a polyvinyl fluoride, a polyvinylidene fluoride, poly(vinylidene fluoride- hexafluoropropylene), poly(vinylidene fluoride-chlorotrifluroethylene), poly(ethylene chlorotrifluoroethylene or mixtures thereof.

14. The multi-layer film of either paragraphs 12 or 13, wherein the first outer layer further comprises an acrylic or methacrylic compatibilizer.

15. The multi-layer film of either of paragraph 13, wherein the acrylic or methacrylic compatibilizer of the first outer layer is a poly methacrylate, a poly(methyl methacrylate) or mixtures thereof.

16. The multi-layer film of any of paragraphs 12 through 15, wherein the polyester is polyethylene terephthalate, polyethylene naphthanate, polyethylene terephthalate glycol (PETg) or mixtures thereof.

17 The multi-layer film of any of paragraphs 12 through 15, wherein the polycarbonate is a bisphenol A based homopolymer, a bisphenol A based copolymer or mixtures thereof.

18. The multi-layer film of any of paragraphs 12 through 17, wherein the second interior layer further comprises an acrylic or methacrylic compatibilizer.

19. The multi-layer film of paragraph 18, wherein the acrylic or methacrylic compatibilizer of the second interior layer is a poly methacrylate, a poly(methyl methacrylate) or mixtures thereof.

20. The multi-layer film of any of paragraphs 12 through 19, wherein the polyolefin melt adhesive is selected from ethylene vinyl acetate, ethylene octane, ethylene propylene, ethylene methyl acrylates (EMAC), ethylene butyl acrylates (EBAC), ethylene acrylic acid (EAA), ionomer grafted polyethylenes or mixtures thereof.

21. The multi-layer film of any of paragraphs 12 through 19, wherein the polyolefin melt adhesive is ethylene vinyl acetate.

22. The multi-layer film of any of paragraphs 12 through 21, wherein the polyolefin melt adhesive further comprises an alkyl tin compatibilizer.

23. The multi-layer film of paragraph 22, wherein the alkyl tin compatibilizer is dibutyl tin.

24. A multi-layer film comprising: a first outer layer comprising a fluoropolymer; and a second layer comprising a polyester or a polycarbonate.

25, The multi-layer Him of paragraph 24, wherein the first outer layer fluoropolymer is a polyvinyl fluoride, a polyvinylidene fluoride, a poly(vinylidene fluoride-chlorotrifluoroethylene), a poly(vinylidene fluoride-hexafluoropropylene), a poly(ethylene chlorotrifluoroethylene) or mixtures thereof.

26, The multi-layer film of either of paragraphs 24 or 25, wherein the first outer layer further comprises an acrylic or methacrylic compatibilizer.

27. The multi-layer film of paragraph 26, wherein the acrylic or methacrylic compatibilizer of the first outer layer is a poly methacrylate, a poly(methyl methacrylate) or mixtures thereof.

28. The multi-layer film of any of paragraphs 24 through 27, wherein the polyester is polyethylene terephthalate, polyethylene naphthanate, polyethylene terephthalate glycol (PETg) or mixtures thereof.

29. The multi-layer film of any of paragraphs 24 through 27, wherein the polycarbonate is a bisphenol A based homopolymer, a bisphenol A based copolymer or mixtures thereof.

30. The multi-layer film of any of paragraphs 24 through 29, wherein the second layer further comprises an acrylic or methacrylic compatibilizer.

31. The multi-layer film of paragraph 30, wherein the acrylic or methacrylic compatibilizer of the second interior layer is a poly methacrylate, a poly(methyl.methacrylate) or mixtures thereof.

32. The multi-layer film of any of paragraphs 1 through 31, wherein the multi-layer film comprises between 3 and 12 layers in total.

33. The multi-layer film of any of paragraphs 1 through 31, wherein the multi-layer film comprises between 3 and 9 layers in total.

34. A multi-layer film comprising: a first layer, wherein the first layer is a fluoropolymer; a second layer, wherein the second layer is a compatibilizer in contact, with the first layer; a third layer, wherein the third layer is a polyester or polycarbonate in contact with the second layer; a fourth layer, wherein the fourth layer is a compatibilizer in contact with the third layer; and a fifth layer, wherein the fifth layer is a fluoropolymer or a polyolefin melt adhesive in contact with the fourth layer.

35, The multi-layer film of paragraph 34, wherein the first fluoropolymer layer is a polyvinyl fluoride, a polyvinylidene fluoride, a poly(vinylidene fluoride-chlorotrifluoroethylene), a poly(vinylidene fluoride-hexafluoropropylene), a poly(ethylene chlorotrifluoroethylene) or mixtures thereof.

36. The multi-layer film of either paragraphs 34 or 35, wherein the second layer is a poly methacrylate or a poly(methyl methacrylate), an alkyl tin oxide, a grafted copolymer or mixtures thereof.

37. The multi-layer film of any of paragraphs 34 through 36, wherein the third layer is polyethylene terephthalate, polyethylene naphthanate, polyethylene terephthalate glycol (PETg) or mixtures thereof.

38. The multi-layer film of any of paragraphs 34 through 37, wherein the third layer is a bisphenol A based homopolymer, a bisphenol A based copolymer or mixtures thereof.

39. The multi-layer film of any of paragraphs 34 through 38, wherein the fourth layer is a poly methacrylate or a poly(methyl methacrylate), an alkyl tin oxide, a grafted copolymer or mixtures thereof.

40. The multi-layer film of any of paragraphs 34 through 39, wherein the fifth layer is a fluoropolymer selected from a polyvinyl fluoride, a polyvinylidene fluoride, poly(vinylidene fluoride-hexafluoropropylene), poly(vinylidene fluoride- chlorotrifluroethylene), poly(ethylene chlorotrifluoroethylene) or mixtures thereof.

41. The multi-layer film of any of paragraphs 34 through 39, wherein the fifth layer is a polyolefin melt selected from ethylene vinyl acetate, ethylene octane, ethylene propylene, ethylene methyl acrylates (EMAC), ethylene butyl acrylates (EBAC), ethylene acrylic acid (EAA), ionomer grafted polyethylenes or mixtures thereof.

42. The multi-layer film of any of paragraphs 1 through 41, wherein one or more of the fluoropolymer layers further comprises a filler.

43. The multi-layer film of paragraph 42, wherein the filler is titanium dioxide.

44. The multi-layer film of any of paragraphs 1 through 43, wherein the multilayer film retains greater than about 80% of its elongation to break after 500 hours exposure to damp heat at 85°C at 85% relative humidity.

45. The multi-layer film of any of paragraphs 1 through 43, wherein the multilayer film retains greater than about 80% of its dielectric strength after 500 hours exposure to damp heat at 85°C at 85% relative humidity.

46. A multi-layer film of any of paragraphs 1 through 45, wherein the multi-layer film is adjacent to a photovoltaic device.

47. A process to prepare a multi-layer film, comprising the step of coextruding a first fluoropolymer layer; a second interior layer comprising a polyester or a polycarbonate; and a third layer comprising a fluoropolymer or a polyolefin melt adhesive as described in any of paragraphs 1 through 23,

48. A process to prepare a multi-layer film, comprising the step of coextruding a fluoropolymer; and a second layer comprising a polyester or a polycarbonate as described in any of paragraphs 24 through 31.

The invention will be further described with reference to the following non-limiting Examples. It will be apparent to those skilled in the art that many changes can be made in the embodiments described without departing from the scope of the present invention. Thus the scope of the present invention should not be limited to the embodiments described in this application, but only by embodiments described by the language of the claims and the equivalents of those embodiments. Unless otherwise indicated, all percentages are by weight.

Examples

Example 1

PVDF/(PETg+20% PMMA)/PVDF: 38.1/76.2/38.1 micrometers (1.5/3/1.5 mils)

Temperature Profile-PVDF 250°C, (PETg+20% PMMA)-260°C, Exit Die- 260°C Screw Speeds-Skin Layers- 8 rpm, core layer- 30 rpm

PETg is a co-polethylene terephthalate available from Eastman Chemical Company (Eastar 6763). It has the general formula:

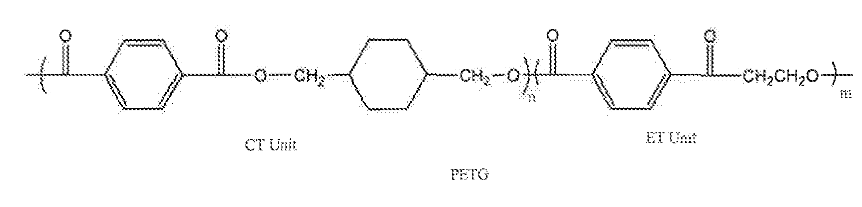

Example 2

P(VDF-HFP)/(PETg+20% PMMA)/P(HFP: 38.1/76.2/38.1 micrometers (1.5/3/1.5 mils) (HFP is Hexa FluoroPropylene)

Temperature Profile- P(VDF- HFP) 240°C, (PETg+20% PMMA)- 260°C, Exit Die- 260°C Screw Speeds- Skin Layers- 8 rpm, core layer- 30 rpm

Example 3

ECTFE/PETg/ECTFE: 38.1/76.2/38.1 micrometers (1.5/3/1.5 mils)

Temperature Profile- ECTFE 280°C, PETg- 260°C, Exit Die-270°C Screw Speeds- Skin Layers- 10 rpm, core layer- 30 rpm

Example 4

ECTFE//PC/ECTFE: 38.1/76.2/38.1 micrometers (1.5/3/1.5 mils)

Temperature Profile- ECTFE 280°C, PC- 260°C, Exit Die-270°C Screw Speeds- Skin Layers- 10 rpm, core layer- 30 rpm

Example 5

(PVDF-Acrylic-TiO₂)/PC/(PVDF-Acrylic-TiO₂): 38.1/76.2/38.1 micrometers (1.5/3/1.5 mils)

Temperature Profile- PVDF 230°C, PC- 240°C, Exit Die-220°C Screw Speeds- Skin Layers- 10 rpm, core layer- 12 rpm

As shown in the following table, the films from example 2 show comparable water vapor transport (WVTR), dielectric breakdown strength and tensile elongation at break properties to the Tedlar/Polyester/Tedlar multi-layer films currently used in the market. The films from example 1 show vastly superior properties to the Tedlar/Polyester/Tedlar multi-layer films currently used in the market. In particular, WVTR is more than five times lower; dielectric strength and elongation at break are 1.5 times higher. Most PV module failures are related to moisture ingress and hence a low WVTR is desirable in PV packaging materials.

WVTR was measured at 100°F and 100% RH using Mocon 3/32 PERMATRON water vapor analyzer, per ASTM E96-80. Water vapor flux was measured as a function of time and peak value was calculated after the permeation stabilized. Dielectric breakdown strength was measured per ASTM D149. Tensile elongation @ break was measured per ASTM D1238. Dogbones were cut from film samples and films were stretched at 50%/min till fracture.

| Property | **Example 4** | **Example 1** | **Example 2** | **Example 5** | **T/P/T** |
|---|---|---|---|---|---|
| | ECTFE/PC/ ECTFE 38.1/76.2/38.1 micrometers (1.5/3/1.5 mils) | PVDF/ (PETg+20% PMMA)/ PVDF 38.1/76.2/38.1 micrometers (1.5/3/1.5 mils) | P(VDF-HFP) /(PETg+20%PMMA)/ P(VDF-HFP) 38.1/76.2/38.1 micrometers (1.5/3/1.5 mils) | P(VDF-HFP)-Acrylic- TiO2/ PC/P(VDF-HFP)-acrylic-TiO2 38.1/76.2/38.1 micrometers (1.5/3/1.5 mils) | **38.1/76.2/38.1 micrometers (1.513/1.5 mils) Madico Product** |
| WVTR (g.mm/m2.day) | 0.2 ± 0.005 | 1.61±0.02 | 1.60±0.02 | TBD | 1.3 |
| Dielectric Strength (kV/mm) | 130±5 | 83±3 | 100±2 | 97±3 | 90 |
| Elongation at break (%) | 250±10 250± 10 | 200 ± 10 | 350±2 | 410±7 | 150 |
| % Elongation Retained after 500 h damp heat | 85% (interlayer failure) | 10% | 84% | 90% | 90% |
| Adhesion After 500 h damp heat | Fails tape peel | Passes tape peel | Passes tape peel | Passes tape peel | Passes Tape Peel |

Damp heat conditioning cycle involves exposure to 85°C, 85% relative humidity for a specified amount of time, typically between about 500 and 2000 hours.

UL 1703 (Standard from Underwriters Laboratory, Northbrook IL for "Flat Plate Photovoltaic Modules and the components therein") and IEC 61215 (Standard from International Electrotechnical Commission for "Flat Plate Photovoltaic Modules and the components therein") describe damp heat conditioning among a list of required conditioning cycles, the contents of which are incorporated herein by reference.

Either damp heat test was suitable as they are equivalent.

For the tape peel test, a piece of scotch single sided tape was applied to each of the layers. They were pulled away from each other at right angles. Delamination between layers was taken as failure. If the piece of tape came-off without layer delamination, then the sample was termed as "passes tape peel".

Surprisingly, PVDF copolymers showed an increase in resistance to damp heat aging compared to the homopolymer. Damp heat aging in PVDF homopolymers has been attributed to recrystallization. Copolymerization could be disrupting crystallinity and hence preventing damp heat aging.

Although the present invention has been described with reference to preferred embodiments, persons skilled in the art will recognize that changes may be made in form and detail without departing from the scope of the invention. Those skilled in the art will recognize, or be able to ascertain, using no more than routine experimentation, many equivalents to specific embodiments of the invention described specifically herein. Such equivalents are intended to be encompassed in the scope of the following claims.

## Claims

1. A multi-layer coextruded film comprising:
a first layer, wherein the first layer is a fluoropolymer;
a second layer, wherein the second layer is a tie layer in contact with the first layer, wherein the tie layer is a poly(methyl acrylate) or a poly(methyl methacrylate);
a third layer, wherein the third layer is a polyester or polycarbonate in contact with the second layer;
a fourth layer, wherein the fourth layer is a tie layer in contact with the third layer, wherein the tie layer is a poly(methyl acrylate) or a poly(methyl methacrylate); and
a fifth layer, wherein the fifth layer is a fluoropolymer or a polyolefin melt adhesive in contact with the fourth layer.

2. The multi-layer coextruded film of claim 1, wherein the first layer is PVDF or ETFE.

3. The multi-layer coextruded film of either claim 1 or 2, wherein the second layer is poly(methyl methacrylate).

4. The multi-layer coextruded film of any of claims 1 through 3, wherein the third layer is a polyester.

5. The multi-layer coextruded film of claim 4, wherein the polyester is polyethylene terephthalate.

6. The multi-layer coextruded film of any of claims 1 through 5, wherein the fourth layer is poly(methyl methacrylate).

7. The multi-layer coextruded film of any of claims 1 through 6, wherein the fifth layer is PVDF or ETFE.

8. The multi-layer coextruded film of claim 1, wherein the first and fifth layers are each PVDF, the second and fourth layers are each poly(methyl acrylate) and the third layer is polyethylene terephthalate.
